# EUROPEAN PATENT SPECIFICATION

(11) **EP 4 325 167 B1**
(45) Date of publication and mention of the grant of the patent: **21.10.2026**
(21) Application number: 22877877.5
(22) Date of filing: 27.09.2022
(51) Int. Cl.: G01B 21/32, G01B 5/28

(54) **ELECTRODE PLATE WAVY EDGE DETECTION DEVICE AND ELECTRODE PLATE WAVY EDGE DETECTION METHOD**
VORRICHTUNG ZUR ERKENNUNG WELLENFÖRMIGER KANTEN EINER ELEKTRODENPLATTE UND VERFAHREN ZUR ERKENNUNG WELLENFÖRMIGER KANTEN EINER ELEKTRODENPLATTE
DISPOSITIF ET PROCÉDÉ DE DÉTECTION DE BORD ONDULÉ DE PLAQUE D'ÉLECTRODE

(30) Priority: 08.10.2021 CN 202122412544 U
(43) Date of publication of application: 21.02.2024
(73) Proprietor: Contemporary Amperex Technology (Hong Kong) Limited, Central, Central And Western District (HK)
(72) Inventor: LI, Jian, Ningde, Fujian 352100 (CN)
(74) Representative: Ziebig Hengelhaupt Intellectual Property Attorneys Patentanwaltskanzlei PartGmbB
(86) International application number: PCT/CN2022/121741
(87) International publication number: WO 2023/056858

(56) References cited:
- CN-A- 105 806 301
- CN-A- 109 916 267
- CN-U- 205 245 948
- CN-U- 206 862 332
- CN-U- 213 067 429
- CN-U- 215 984 490
- DE-A1- 3 231 965
- JP-B2- 6 186 847
- US-A1- 2007 126 314

## Description

### CROSS-R EFERENCE TO RELATED APPLICATIONS

The present application claims priority to Chinese Patent Application No. 202122412544.7, filed to the Chinese Patent Office on October 08, 2021 and entitled "APPARATUS FOR DETECTING WAVY EDGE OF ELECTRODE SHEET".

### TECHNICAL FIELD

The present application relates to the technical field of electrode sheet detection, in particular to an apparatus for detecting a wavy edge of an electrode sheet and a method for detecting a wavy edge of an electrode sheet.

### BACKGROUND

A wound-type battery is mainly made as follows: a positive electrode sheet, a separator, and a negative electrode sheet are stacked and then wound to form a battery cell, which is then subjected to processes such as liquid injection, packaging, and formation.

An electrode sheet of a lithium battery is generally prepared by uniformly coating the slurry on both sides of an aluminum or copper current collector according to a certain surface density of the electrode sheet, and removing the solvent in the slurry by baking; and a roll of electrode sheet is continuously rolled to a specified thickness by a roller machine, and then is slitted and connected to a tab. In the process of sheet production, especially after rolling, the difference in extension between the middle and both sides of the coating region of the electrode sheet may cause the phenomenon of a wavy edge of the electrode sheet, abnormal winding deviation or wrinkle, which may lead to poor quality of the electrode sheet or safety problems of a battery cell. Therefore, it is very important to detect a wavy edge of the electrode sheet.

In some cases, the wavy edge of the electrode sheet is detected by an offline manual method, which has low detection accuracy.

DE 32 31 965 A1 discloses a device for measuring the thickness profile of coated strip material using a spring-mounted contact probe that converts movements caused by surface bulges or waviness into electrical signals.

### SUMMARY

In view of the foregoing problems, embodiments of the present application provide an apparatus for detecting a wavy edge of an electrode sheet and a method for detecting a wavy edge of an electrode sheet, which could solve the problem of low detection accuracy of manual detection of the wavy edge of the electrode sheet.

In a first aspect, some embodiments of the present application provide an apparatus for detecting a wavy edge of an electrode sheet, according to claim 1.

In a technical solution of an embodiment of the present application, a movable assembly is movably coupled to a supporting member, and a detecting member is fixed on the movable assembly. At the wavy edge of the electrode sheet, the movable assembly moves along the supporting member in a direction close to the wavy edge of the electrode sheet so as to be in contact with the wavy edge of the electrode sheet. When the detecting member detects that the movable assembly moves toward the electrode sheet, it can be determined that a wavy edge exists at the current position of the electrode sheet, and thus the detection accuracy and detection efficiency are high.

In some embodiments, the movable assembly includes a power mechanism movably coupled to the supporting member, and a connector coupled to the power mechanism. The connector is configured to move with the power mechanism toward a position close to the electrode sheet, to be in contact with the electrode sheet.

When the wavy edge of the electrode sheet is detected, the connector moves together with the power mechanism in a direction close to the wavy edge of the electrode sheet, so as to be in contact with the wavy edge of the electrode sheet. The detecting member detects the wavy edge of the electrode sheet based on the movement of the power mechanism and the connector toward the wavy edge of the electrode sheet.

In some embodiments, the detecting member includes a pressure sensor coupled between the power mechanism and the connector, and the pressure sensor is configured to sense an applied force between the connector and the electrode sheet, and the movable assembly moves with a variation of the applied force.

The pressure sensor can sense the applied force between the electrode sheet/the wavy edge of the electrode sheet and the connector, and the applied force sensed presents the movement of the power mechanism and the connector in a direction close to or away from the electrode sheet/the wavy edge of the electrode sheet, thereby detecting the wavy edge of the electrode sheet.

In some embodiments, the detecting member further includes a displacement detecting member coupled to the power mechanism, and the displacement detecting member is configured to detect displacement of the movable assembly.

The displacement detecting member is provided, which can detect the position change of the power mechanism and the connector relative to the supporting member, and obtain the displacement of the power mechanism and the connector to the wavy edge of the electrode sheet through the position change, thereby detecting the wavy edge of the electrode sheet.

In some embodiments, the supporting member is provided with a measuring tool, and the measuring tool is opposite to the displacement detecting member in terms of position, and the displacement detecting member reads displacement of the movable assembly through the measuring tool.

The measuring tool is disposed on the supporting member, which can facilitate that the displacement detecting member reads the relative position of the movable assembly and the supporting member during the movement process, so as to obtain the displacement of the movable assembly through the change in the relative position, thereby accurately detecting the wavy edge of the electrode sheet.

In some embodiments, the apparatus for detecting the wavy edge of the electrode sheet further includes a controller, the controller is electrically connected to the pressure sensor and the power mechanism, and the controller is configured to receive an applied force value sent by the pressure sensor and control movement of the power mechanism according to the applied force value.

The controller is connected to the pressure sensor and the power mechanism, so that the controller can obtain the applied force value between the connector and the electrode sheet/the wavy edge of the electrode sheet that is sensed by the pressure sensor in real time and control the moving direction of the power mechanism in real time based on the obtained applied force value, so as to detect the wavy edge of the electrode sheet while avoiding the damage to the electrode sheet due to the excessive amplitude of the movement of the connector.

In some embodiments, the controller is further coupled to the displacement detecting member, the controller is further configured to receive displacement sent by the displacement detecting member and determine a wavy edge level of the electrode sheet according to the displacement, and the wavy edge level is a ratio of the displacement to a distance between two passing rollers supporting the electrode sheet.

The controller is connected to the displacement detecting member, so that the controller can obtain the displacement of the power mechanism and the connector moving toward the wavy edge of the electrode sheet that is detected by the displacement detecting member in real time, and the wavy edge of the electrode sheet can be accurately detected based on the obtained displacement. In addition, by introducing the concept of wavy edge level, the uniform measurement of the wavy edge of the electrode sheet can be realized under the conveying of different detecting machines.

According to the claimed invention, the apparatus for detecting the wavy edge of the electrode sheet further includes: a second detecting assembly, disposed on a midline of a length direction of the electrode sheet and movably coupled to the supporting member, the second detecting assembly having a same structure as the first detecting assembly, and the second detecting assembly being configured to determine an initial position of the first detecting assembly.

Since there is the least possibility of a wavy edge at the midline position of the length direction of the electrode sheet, a distance between the movable assembly of the second detecting assembly and a plane of the electrode sheet is the most accurate when the second detecting assembly is disposed at this position. The second detecting assembly is disposed at the midline position of the length direction of the electrode sheet, which can facilitate that the second detecting assembly provides the controller with the initial position of the movable assembly in the first detecting assembly to further obtain the displacement of the movable assembly based on the initial position, thereby accurately detecting the wavy edge of the electrode sheet.

In some embodiments, the first detecting assembly and the second detecting assembly are arranged side by side in a width direction of the electrode sheet.

Since the two sides of the electrode sheet in the width direction are positions where a wavy edge most likely to be generated and the side-by-side positions of the electrode sheet in the width direction usually have a wavy edge only at one side, the first detecting assembly and the second detecting assembly are distributed at positions where a wavy edge is most likely to appear, so that the second detecting assembly can provide the controller with the initial position of the movable assembly in the first detecting assembly, which facilitates detection of the wavy edge of the electrode sheet by the first detecting assembly.

In some embodiments, the connector is provided with a flexible member, and the flexible member is configured to be in contact with the electrode sheet.

Such a design can prevent the connector from scratching the electrode sheet when the connector is in contact with the electrode sheet.

In the second aspect, some embodiments of the present application provide a method for detecting a wavy edge of an electrode sheet, according to claim 10.

In a technical solution of an embodiment of the present application, on the basis of ensuring that the movable assembly is always in contact with the electrode sheet, if the detecting member detects that the movable assembly moves towards the electrode sheet, it can be determined that a wavy edge exists at the current position of the electrode sheet, and thus, the detection accuracy is high, the detection operation is simple and fast, and the detection efficiency is high.

In a third aspect, some embodiments of the present application provide an apparatus for detecting a wavy edge of an electrode sheet, according to claim 11.

In a technical solution of an embodiment of the present application, a movable assembly configured to be in contact with the electrode sheet is coupled to the supporting member, and a pressure sensor in the detecting member is coupled to the movable assembly. When the movable assembly is in contact with the wavy edge of the electrode sheet, the pressure sensor can detect significant variation of the applied force between the movable assembly and the electrode sheet, and thus it can be determined that a wavy edge exists at the current position of the electrode sheet, and the detection accuracy and detection efficiency are high.

In some embodiments, the movable assembly includes a power mechanism and a connector configured to be in contact with the electrode sheet, the power mechanism is coupled to the connector; the pressure sensor is coupled between the power mechanism and the connector and is configured to detect an applied force between the connector and the electrode sheet; and the power mechanism is coupled to the supporting member.

The force applied to the connector by the electrode sheet is transmitted to the pressure sensor through the connector, and then the applied force between the electrode sheet and the connector is detected by the pressure sensor.

In some embodiments, a detecting part of the pressure sensor is in contact with the power mechanism or the connector.

The force acting on the power mechanism or the connector is detected by the detecting part of the pressure sensor, and the applied force between the electrode sheet and the connector can be obtained by detection.

In some embodiments, the apparatus for detecting the wavy edge of the electrode sheet includes a controller, the controller being electrically connected to the pressure sensor, the controller being configured to receive an applied force value sent by the pressure sensor and determine whether the electrode sheet has a wavy edge according to the applied force value.

The controller can accurately receive the applied force value sent by the pressure sensor in real time, thereby accurately determining whether the electrode sheet has a wavy edge, and improving the detection efficiency and detection accuracy. In some embodiments, the power mechanism is movably coupled to the supporting member, such that the power mechanism is capable of moving toward a position close to the electrode sheet relative to the supporting member; the controller is electrically connected to the power mechanism, and the controller is configured to receive an applied force value sent by the pressure sensor and control movement of the power mechanism according to the applied force value.

The movement of the power mechanism is controlled by the controller and the pressure sensor, so that the automatic detection of the wavy edge of the electrode sheet can be realized, which is more efficient and accurate, and also reduces the damage to the electrode sheet.

In some embodiments, the detecting member further includes a displacement detecting member coupled to the power mechanism, and the displacement detecting member is configured to detect displacement of the power mechanism.

The displacement detecting member can accurately detect the displacement of movement of the connector at the wavy edge of the electrode sheet, so that the wavy edge level of the electrode sheet can be quantified more precisely, so that the tightness of the wavy edge of the electrode sheet can be more clearly and accurately understood.

In some embodiments, the controller is further electrically connected to the displacement detecting member, the controller is further configured to receive displacement sent by the displacement detecting member and determine a wavy edge level of the electrode sheet according to the displacement, and the wavy edge level is a ratio of the displacement to a distance between two passing rollers supporting the electrode sheet.

The displacement of movement of the power mechanism detected by the displacement detecting member can be sent to the controller, and the controller can perform an operation on the displacement and the distance between the two passing rollers to obtain the specific value of the wavy edge level of the electrode sheet, so as to accurately quantify the wavy edge level of the electrode sheet and make the detection and evaluation of the wavy edge of the electrode sheet more accurate. Meanwhile, as for the concept of wavy edge level, the distance between the two passing rollers is introduced, so that the wavy edge of the electrode sheet can be measured under the conveying of different detecting machines.

In some embodiments, one end of the connector that is configured to be in contact with the electrode sheet is provided with a smooth rigid member.

The smooth rigid member is configured to be in contact with the electrode sheet. On the one hand, it reduces the sliding friction forces between the connector and the electrode sheet, reducing damage to the electrode sheet. On the other hand, the rigid member can transmit the applied force more accurately, improving the detection sensitivity and precision.

According to the claimed invention, the apparatus for detecting the wavy edge of the electrode sheet further includes a second detecting assembly, the second detecting assembly having a same structure as the first detecting assembly; the movable assembly in the second detecting assembly is configured to be in contact with a midline portion of a width direction of the electrode sheet and be coupled to the supporting member.

The contact force between the movable assembly in the second detecting assembly and the electrode sheet serves as an applied force threshold in the first detecting assembly, so that the applied force threshold of the first detecting assembly is updated in real time, thereby reducing the influence of small changes in the degree of tightness caused by preparation factors or installation factors of the electrode sheet, and improving the accuracy for detecting of whether a wavy edge exists at the current position where the first detecting assembly is in contact with.

In some embodiments, the apparatus for detecting the wavy edge of the electrode sheet further includes a controller, and the controller being coupled to the pressure sensor and the second detecting assembly.

The controller may collect the applied force value detected by the pressure sensor in the second detecting assembly in real time and update the same as the applied force threshold of the first detecting assembly, and in this way, updating in real time can be realized and errors can be reduced, which is conducive to improving detection accuracy.

In a fourth aspect, some embodiments of the present application provide a method for detecting a wavy edge of an electrode sheet, according to claim 15.

In a technical solution of an embodiment of the present application, the pressure sensor detects the variation of the applied force between the movable assembly and the electrode sheet, it can then be determined that a wavy edge exists at the current position of the electrode sheet, and thus, the detection accuracy is high, the detection operation is simple and fast, and the detection efficiency is high.

The foregoing description is only a summary of the technical solutions of the embodiments of the present application. In order to better understand the technical means of the embodiments of the present application, it can be implemented according to the contents of the description, and in order to make the foregoing and other purposes, features, and advantages of the embodiments of the present application more clearly understood, a detailed description of the embodiments of the present application is provided below.

For the apparatus and method for detecting the wavy edge of the electrode sheet provided in the embodiments of the present application, during the process of the movable assembly being in contact with the electrode sheet, if the detecting member detects the movement of the movable assembly or the pressure sensor detects the variation of the applied force between the movable assembly and the electrode sheet, it can be accurately determined that a wavy edge exists at the current position of the electrode sheet, and thus the detection accuracy is high, the detection operation is simple and fast, and the detection efficiency is high.

### BRIEF DESCRIPTION OF THE DRAWINGS

To describe technical solutions in embodiments of the present application more clearly, the following briefly introduces accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a schematic structural diagram of an apparatus for detecting a wavy edge of an electrode sheet in some embodiments of the present application;
FIG. 2 is a schematic diagram of detecting a wavy edge of an electrode sheet by an apparatus for detecting a wavy edge of an electrode sheet in some embodiments of the present application;
FIG. 3 is a schematic diagram of coupling of a moveable assembly and a supporting member in some embodiments of the present application;
FIG. 4 is a schematic diagram of a movable assembly and a detecting member in some embodiments of the present application; and
FIG. 5 is a schematic structural diagram of an apparatus for detecting a wavy edge of an electrode sheet in some other embodiments of the present application.

### DESCRIPTION OF REFERENCE SIGNS

supporting member 1;
first detecting assembly 2, movable assembly 21, power mechanism 211, connector 212, flexible member 213, detecting member 22, pressure sensor 221, displacement detecting member 222, measuring tool 223;
second detecting assembly 3;
controller 4;
electrode sheet 5; and
roller 6.

### DESCRIPTION OF EMBODIMENTS

To make the objectives, technical solutions and advantages of the embodiments of the present application clearer, the following clearly describes the technical solutions in the embodiments of the present application with reference to the accompanying drawings in the embodiments of the present application. Apparently, the described embodiments are merely some but not all of the embodiments of the present application. All the other embodiments obtained by a person of ordinary skill in the art based on the embodiments of the present application without any inventive effort shall fall within the scope of protection of the present application.

Unless otherwise defined, all technical and scientific terms used herein have the same meaning as that commonly understood by a person skilled in the technical field of the present application; the terms used in the specification applied herein are only for the purpose of describing specific embodiments, and are not intended to limit the present application.

The term "comprising" and any variations thereof in the specification and claims of the present application as well as the above description of the drawings are intended to cover but not to exclude other contents.

A phrase "embodiment" referred to herein means that a particular feature, structure, or characteristic described in combination with the embodiment can be included in at least one embodiment of the present application. The phrase occurred in various places of the specification does not necessarily all refer to the same embodiment, nor is it a separate or alternative embodiment mutually exclusive of another embodiment. A person skilled in the art understands in explicit and implicit manners that an embodiment described herein may be combined with another embodiment.

The term "and/or" herein is only a kind of association relationship describing associated objects, which means that there may be three kinds of relationships. For example, A and/or B may mean the following three cases: A exists alone, both A and B exist at the same time, and B exists alone. In addition, the character "/" herein generally indicates that the associated objects before and after the character are in an "or" relationship.

The orientation words in the following descriptions all refer to the directions shown in the figures, but do not limit the specific structure of an apparatus for detecting an edge of an electrode sheet of the present application. For example, in the description of the present application, the orientation or positional relationship indicated by terms "width", "horizontal", or the like are based on the orientation or positional relationship shown in the figures, and are only for the convenience of describing the present application and simplifying the description, rather than indicating or implying that the apparatus or element referred to necessarily have the specific orientation and are constructed and operated in the specific orientation, and therefore they should not be construed as limiting the present application.

In addition, terms such as "first" and "second" in the specification and claims of the present application as well as the above description of the drawings are only used to distinguish different objects, rather than describing a specific sequence, and may explicitly or implicitly include one or more of the feature.

In the description of the embodiments of the present application, it should be noted that unless otherwise clearly specified and defined, technical terms such as "installation", "interconnection", and "connection" should be interpreted in a broad sense, for example, it can be a fixed connection, or a detachable connection, or an integrated connection; it can also be a mechanical connection, or an electrical connection; it can be a direct connection, or an indirect connection through an intermediary, and it can be internal communication between two elements or interaction relationship between two elements. A person of ordinary skill in the art can understand the specific meanings of the above terms in the embodiments of the present application according to specific situations

The types of wavy edges of an electrode sheet include a wavy edge generated in slitting and winding processes, a wavy edge generated in the cold pressing process or generated by coating the edge, a wavy edge generated due to swelling in the coating process, a wavy edge generated due to tensions of an aluminum foil, a wavy edge generated due to warping in the slitting process, and a sawtooth wavy edge generated in the slitting process. Among them, the wavy edge generated due to tensions of the aluminum foil is common, and its formation mechanism is: the edge tensions of the incoming aluminum foil are uneven; when the foil passes rollers, one side is loose and one side is tight or two side are loose; a distinct wavy edge appears after the loose edge is cold pressed; and the greater the distance between the rollers is, the more distinct the wavy edge appears. Compared with a non-wavy edge portion, the degree of tightness of a wavy edge portion of the electrode sheet is low. In the following of the present application, the apparatus for detecting the wavy edge of the electrode sheet is described by taking the detection of the wavy edge generated due to tensions of the aluminum foil as an example.

The presence of the wavy edge of the electrode sheet has a risk of short-circuiting inside the battery to which it is applied; and therefore, it is necessary to detect the wavy edge of the electrode sheet to ensure the safety of the battery in the later use.

At present, the method for detecting the wavy edge of the electrode sheet is mainly to directly perform manual measurement through a ruler. Due to the small dimension of the wavy edge of the electrode sheet, the accuracy of manual measurement cannot be guaranteed. In addition, when the same electrode sheet is cut, multiple wavy edges may appear, requiring a person to measure them one by one, which has high labor cost and low detection efficiency.

In order to solve the technical problem of low accuracy of manual measurement of wavy edge detection, the inventor, after intensive research, has designed an apparatus for detecting a wavy edge of an electrode sheet, a movable assembly being disposed on the supporting member and a detecting member being disposed on the movable assembly.

When the wavy edge of the electrode sheet is detected, the movable assembly may move along the supporting member in a direction close to the wavy edge of the electrode sheet, so to be in contact with the wavy edge of the electrode sheet; and the detecting member enables accurate detection of the wavy edge of the electrode sheet based on movement of the movable assembly toward the wavy edge of the electrode sheet.

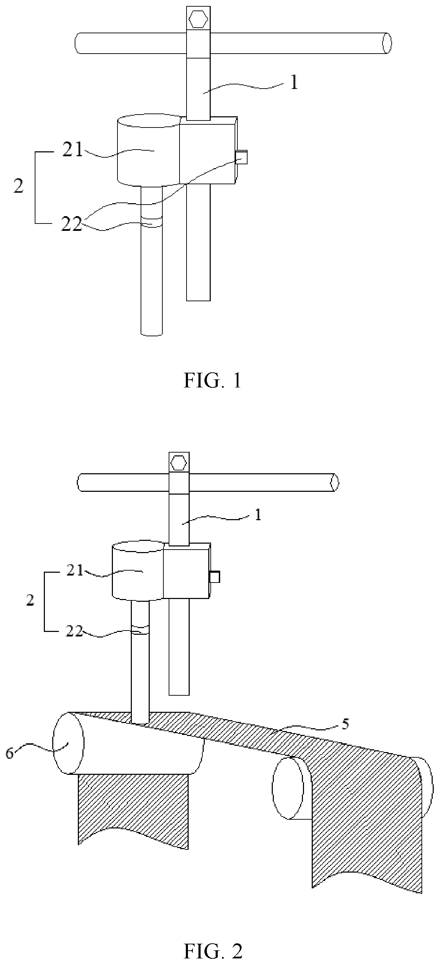

According to some embodiments of the present application, reference is made to FIG. 1, which is a schematic structural diagram of an apparatus for detecting a wavy edge of an electrode sheet. As shown in FIG. 1, the apparatus for detecting the wavy edge of the electrode sheet includes a supporting member 1 and a first detecting assembly 2. The first detecting assembly 2 includes a movable assembly 21 and a detecting member 22. The movable assembly 21 is movably coupled to the supporting member 1, and the movable assembly 21 is configured to move along the supporting member 1 in a direction close to the electrode sheet 5 so as to be in contact with an electrode sheet 5. The detecting member 22 is fixed on the movable assembly 21, and the detecting member 22 is configured to detect a wavy edge of the electrode sheet 5 based on movement of the movable assembly 21.

The supporting member 1 may be a supporting rod, and a shape of the supporting member 1 may be cylindrical, prismatic, or the like. The supporting member 1 may be fixed on a crossbeam above a passing roller by means of a detachable connection during use, and the position of the supporting member 1 relative to the crossbeam may be changed. Specifically, the crossbeam is configured to provide mounting and fixing sites for the supporting member 1. The supporting member 1 may be sleeved on the crossbeam through a fixing ring, and locked by a locking member; the supporting member 1 may also be locked on the crossbeam through a buckle or an electric lock, or the like, and the embodiment of the present application does not limit the manner of fixing the supporting member 1. When there is a demand to detect the wavy edge of the electrode sheet 5 by the apparatus for detecting the wavy edge of the electrode sheet, the apparatus for detecting the wavy edge of the electrode sheet may be placed as in FIG. 1, and the supporting member 1 is moved horizontally along the crossbeam to a position opposite to the electrode sheet 5 and then fixed. When there is no need to detect the wavy edge of the electrode sheet, the supporting member 1 may be moved along the beam to a position staggered from the electrode sheet 5 and fixed.

The first detecting assembly 2 includes a movable assembly 21 and a detecting member 22. The movable assembly 21 may be a telescopic rod. The movable assembly 21 is movably coupled to the supporting member 1, and the movable coupling may be a connection by a slide rail, an engagement by a gear and a rack, or the like. The detecting member 22 may be any device that can be configured to detect the wavy edge of the electrode sheet. The detecting member 22 is fixedly coupled to the movable assembly 21, and the fixed coupling may refer to bonding by an adhesive or the fixing by a screw, which is not limited in the embodiment of the present application.

In order to facilitate the understanding of the movement of the movable assembly 21 along the supporting member 1 in a direction close to the electrode sheet 5, it will be described in detail below.

If the electrode sheet 5 does not have a wavy edge, the degree of the tightness of each portion of the electrode sheet 5 is consistent, and the movable assembly 21 is always in contact with the electrode sheet 5 during the transportation of the electrode sheet 5, so the movable assembly 21 does not need to and will not move.

If the electrode sheet 5 has a wavy edge, the degree of tightness of the wavy edge portion of the electrode sheet 5 is inconsistent with that of the non-wavy edge portion. When the wavy edge portion of the electrode sheet 5 is moved opposite to the movable assembly 21, the movable assembly 21 has to move in a direction close to the electrode sheet 5 in order to be in contact with the electrode sheet 5. It can be seen that to keep the moveable assembly 21 in contact with the electrode sheet 5 at all times, the movable assembly 21 has to move at the wavy edge of the electrode sheet. Thus, the wavy edge of the electrode sheet 5 may be detected on the basis of the movement of the movable assembly 21. It should be noted that the degree of the tightness of the wavy edge portion of the electrode sheet 5 is lower than the non-wavy edge portion, so that when the movable assembly 21 that is movably disposed encounters a loose wavy edge, the movable assembly 21 moves towards the electrode sheet 5.

A process of detecting a wavy edge of an electrode sheet by an apparatus for detecting a wavy edge of an electrode sheet provided by an embodiment of the present application will be explained below with reference to FIG. 2.

Reference is made to FIG. 2, which is a schematic diagram of an apparatus for detecting a wavy edge of an electrode sheet t detecting a wavy edge of an electrode sheet.

Before detection, an electrode sheet 5 may be placed on two passing rollers 6 and conveyed in one direction as the passing rollers 6 rotate. A supporting member 1 and a movable assembly 21 are moved to positions corresponding to a position to be detected of the electrode sheet 5, and the movable assembly 21 is brought into contact with the electrode sheet 5. Here, the position to be detected of the electrode sheet 5 refers to a position on the electrode sheet 5 where there is a high possibility that a wavy edge exists, and may be, for example, an edge of the electrode sheet 5 in the width direction.

As the electrode sheet 5 is conveyed, a wavy edge of the electrode sheet 5 may be detected by a detecting member 22 based on movement of the movable assembly 21. For example, if the detecting member 22 does not detect the movement of the movable assembly 21, it indicates that the electrode sheet 5 does not have a wavy edge exists at the detection position. If the detecting member 22 detects the movement of the movable assembly 21, it indicates that the electrode sheet 5 has a wavy edge at the detection position.

In a specific embodiment, the movable assembly 21 and the supporting member 1 are movably coupled, and the movable assembly 21 can move toward the electrode sheet 5 relative to the supporting member 1. When the movable assembly 21 corresponds to the loose wavy edge, the movable assembly 21 can move toward the electrode sheet 5 under the action of its own gravity, so as to detect the wavy edge of the electrode sheet. The movable assembly 21 and the supporting member 1 can be coupled in a movable connection manner such as a sliding sleeve and a sliding rail.

Based on the foregoing statement, it can be seen that in the embodiment of the present application, the detection of the wavy edge of the electrode sheet can be realized by detecting the movement of the movable assembly 21 along the supporting member 1 in a direction close to the wavy edge of the electrode sheet.

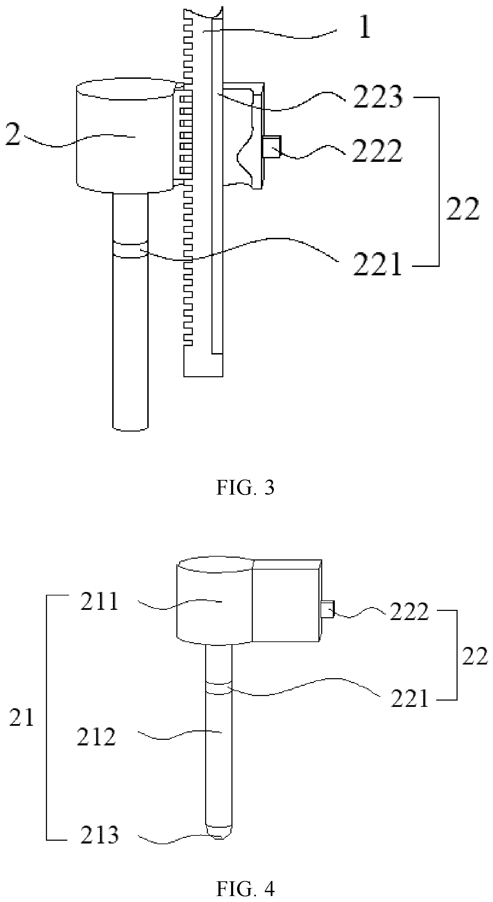

Reference is made to FIG. 3, which is a schematic diagram of coupling of a movable assembly 21 and a supporting member 1 in an embodiment of the present application. As shown in FIGS. 3 and 4, the movable assembly 21 includes a power mechanism 211 and a connector 212. The power mechanism 211 is movably coupled to the supporting member 1. The connector 212 is coupled to the power mechanism 211 and is configured to move with the power mechanism 211 in a direction close to the electrode sheet 5 so as to be in contact with the electrode sheet 5.

It should be noted that the power mechanism 211 can not only move together with the connector 212 in a direction close to the electrode sheet 5 to be in contact with the electrode sheet 5, but also move, when the detection is ended, together with the connector 212 in a direction away from the electrode sheet 5.

The connector 212 may be a connecting rod, a connecting column, or the like, and the shape of the connector 212 may be a cylinder, a prism, or the like. The connector 212 may be coupled to an output shaft of the power mechanism 211, and the specific connection method may be socketing, bonding, or the like.

In order to facilitate the understanding of the movement of the power mechanism 211 and the connecting member 212 in a direction closes to the electrode sheet 5, a detailed description will be given below.

When the power mechanism 211 and the connector 212 correspond to the non-wavy edge portion of the electrode sheet 5, the relative position of the power mechanism 211 and the supporting member 1 does not change, and the distance between the power mechanism 211 and the electrode sheet 5 remains constant.

When the power mechanism 211 and the connector 212 correspond to the wavy edge portion of the electrode sheet 5, the power mechanism 211 and the connector 212 move with the wavy edge of the electrode sheet 5 in a direction close to the electrode sheet 5. Therefore, the detection of the wavy edge of the electrode sheet can be realized based on the movement of the power mechanism 211 and the connector 212.

The connector 212 moves with the power mechanism 211 in a direction close to the wavy edge of the electrode sheet, and is in contact with the wavy edge of the electrode sheet; and the detecting member 22 detects the wavy edge of the electrode sheet based on the movement of the power mechanism 211 and the connector 212 toward the wavy edge of the electrode sheet.

Reference is now made to FIG. 4, which is a schematic diagram of a movable assembly 21 and a detecting member 22. As shown in FIG. 4, the detecting member 22 includes a pressure sensor 221 coupled between a power mechanism 211 and a connector 212, the pressure sensor 221 is configured to sense an applied force between the connector 212 and the electrode sheet 5, and the movable assembly 21 moves with the variation of the applied force.

The pressure sensor 221 may be a semiconductor piezoresistive dispersion pressure sensor. Its principle is that a surface of a sheet undergo a semiconductor deformation applied force, and the sheet is deformed by an external force to generate a piezoresistive effect, so that the change in resistance is converted into an electrical signal.

In a specific embodiment, when the connector 212 corresponds to the non-wavy edge portion of the electrode sheet 5, the applied force between the connector 212 and the non-wavy edge portion remains constant; in the process that the connector 212 corresponds to the wavy edge of the electrode sheet 5, as the electrode sheet is conveyed, the applied force between the connector 212 and the wavy edge of the electrode sheet will first decrease and then increase. Thus, the wavy edge of the electrode sheet may be detected on the basis of the change in the applied force between the connector 212 and the electrode sheet 5.

It should be explained that the connector 212 being in contact with the electrode sheet 5 herein refers to a case where an interaction force exists between the connector 212 and the electrode sheet 5.

The sensing of the applied force between the connector 212 and the electrode sheet 5 by the pressure sensor 221 is that when the connector 212 is in contact with the electrode sheet 5, the electrode sheet 5 applies a force to the connector 212, which is transmitted to the pressure sensor 221 via the connector 212, so that the pressure sensor 221 senses the applied force between the connector 212 and the electrode sheet 5.

In another specific embodiment, to ensure that the connector 212 is always in contact with the electrode sheet 5, that is, there is always an applied force between the connector 212 and the electrode sheet 5, the movement of the power mechanism 211 needs to be ensured.

The pressure sensor 221 can accurately sense the applied force between the electrode sheet 5 and the connector 212, and the applied force that has been detected can facilitate indicating that the power mechanism 211 and the connector 212 move in a direction close to or away from the electrode sheet 5, and when they move in a direction close to the wavy edge of the electrode sheet, the wavy edge of the electrode sheet can be detected. In this way, the variation of the applied force between the connector 212 and the electrode sheet 5 may be sensed by the pressure sensor 221. Meanwhile, the variation of the applied force causes the movement of the power mechanism 211, and when the movable assembly 21 moves, it can be determined that the electrode sheet 5 has a wavy edge at the current position.

In some embodiments, the detecting member 22 further includes a displacement detecting member 222 coupled to the power mechanism 211, and the displacement detecting member 222 is configured to detect the displacement of the movable assembly 21.

The displacement detecting member 222 may be a magnetically sensitive displacement sensor, a photoelectric displacement sensor, a magnetostrictive displacement sensor, a digital laser displacement sensor, or the like. The magnetostrictive displacement sensor accurately detects an absolute position of a movable magnetic ring through an internal non-contact measurement and control technology to measure an actual displacement value of the detected product; and the laser displacement sensor can accurately measure the position, displacement and other changes of the measured object in a non-contact manner.

Based on the foregoing description, in conjunction with FIG. 4, the movable assembly 21 includes a power mechanism 211 and a connector 212, and the connector 212 is coupled to the power mechanism 211. It can be seen that the connector 212 moves together with the power mechanism 211, so the displacement of the movable assembly 21 is also the displacement of the connector 212 or the displacement of the power mechanism 211. Thus, the displacement of movable assembly 21 may be measured by sensing the displacement of connector 212 or the displacement of power mechanism 211.

The displacement of the movable assembly 21 will be described by taking the displacement detected by the displacement detecting member 222 as an example.

When the connector 212 corresponds to the non-wavy edge of the electrode sheet 5, the distance between the power mechanism 211 or the connector 212 and the non-wavy edge portion of the electrode sheet 5 remains constant; in the process that the connector 212 corresponds to the wavy edge of the electrode sheet 5, the connector 212 and the power mechanism 211 need to move together towards the electrode sheet 5, and therefore, the wavy edge of the electrode sheet can be detected based on the movement of the power mechanism 211 or the movement of the connector 212.

It should be noted that since the displacement of the power mechanism 211 and the connector 212 occurs based on the existence of the wavy edge of the electrode sheet, it should be noted that, as the electrode sheet 5 is conveyed, in the process that the connector 212 corresponds to the wavy edge portion, the maximum displacement of the power mechanism 211 and the connector 212 is the same as the maximum spacing of the wavy edge to non-wavy edge portions at the connector 212. Therefore, the displacement detector 222 can detect the displacement of movement of the power mechanism 211 and the connector 212 toward the wavy edge of the electrode sheet, and the displacement of movement of the power mechanism 211 and the connector 212 toward the wavy edge portion of the electrode sheet 5 can be used to measure the degree of tightness of the wavy edge of the electrode sheet. It should be noted that the displacement of movement of the power mechanism 211 and the connector 212 toward the wavy edge of the current electrode sheet that is detected by the displacement detecting member 222 is the maximum displacement of movement of the power mechanism 211 and the connector 212 toward the electrode sheet.

Please continue to refer to FIG. 3, in some embodiments, the supporting member 1 is provided with a measuring tool 223, the measuring tool 223 is opposite to the displacement detecting member 222 in terms of position, and the displacement detector 222 reads the displacement of the movable assembly 21 through the measuring tool 223.

The measuring tool 223 may be an optical ruler, or may be a scale mark disposed on the supporting member 1 and opposite to the displacement of the displacement detecting member 222. Specifically, the optical ruler is obtained by plating and engraving multiple stripes with a width of 1µ on the 3mm attached glass using a moiré fringe of a grating plate and photoelectric conversion technology to form a transparent length ruler, which is then adhered to an aluminum ruler. The optical ruler performs measurement by light refraction or transmission feedback to the grating displacement sensor.

When the measuring tool 223 is an optical ruler, the displacement detecting member 222 is a grating displacement sensor, and specifically, the grating displacement sensor is composed of a main grating and a secondary grating in a pair of grating pairs, and receives a regular fringe pattern (moiré fringes) between black and white generated under the combined action of light interference and diffraction, and converts the black- and-white fringe pattern into an electrical signal with a change in sine waves by the photoelectric device, and obtains two sine waves or square waves with a phase difference of 90° after amplification by an amplifier and shaping by a shaping circuit, and sends the same to a grating digital readout for counting and displaying.

The detection process of the measuring tool 223 and the displacement detecting member 222 will be described below.

When the connector 212 corresponds to the non-wavy edge portion of the electrode sheet 5, the position of the power mechanism 211 on the supporting member 1 is constant, and the data at the position opposite to the measuring tool 223 that is read by the displacement detecting member 222 remains unchanged; in the process that the connector 212 corresponds to the wavy edge of the electrode sheet 5, the position of the power mechanism 211 on the supporting member 1 changes as the relative position of the two changes, and the data on the measuring tool 223 read by the displacement detecting member 222 in real time differs. Therefore, the displacement of the movable assembly 21 can be determined based on the variation of data on the measuring tool 223 read by the displacement detecting member 222, and then the wavy edge of the electrode sheet can be accurately detected through the displacement.

The measuring tool 223 is disposed on the supporting member 1, which can facilitate reading of the position information by the displacement detecting member 222 during the movement of the movable assembly 21, to determine the movement of the movable assembly 21 on the basis of the position information, thereby detecting the wavy edge of the electrode sheet.

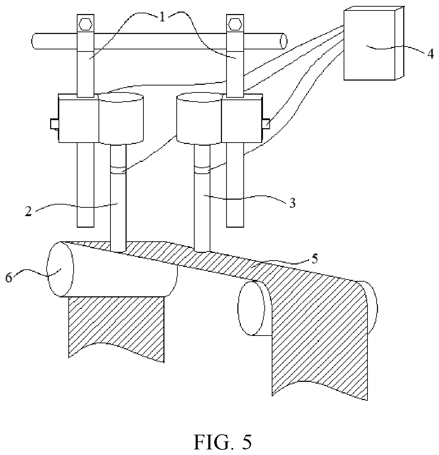

Please refer to FIG. 5, which is a schematic diagram of coupling of an apparatus for detecting a wavy edge of an electrode sheet and a controller 4. As shown in FIG. 5, the apparatus for detecting the wavy edge of the electrode sheet also includes a controller 4, the controller 4 is electrically connected to the pressure sensor 221 and the power mechanism 211, and the controller 4 is configured to receive the applied force value sent by the pressure sensor 221 and control movement of the power mechanism 211 according to the applied force value.

An integrated circuit or a processing unit may be disposed at an inner portion of the controller 4. An applied force threshold can be preset in the controller 4, and the applied force threshold is an interaction force between the connector 212 and the electrode sheet 5 when the connector 212 is just in contact with the electrode sheet 5.

The controller 4 may receive the applied force value sent by the pressure sensor 221 in real time, and may compare the received applied force value with the applied force threshold in real time. When the received applied force value is equal to the applied force threshold, it indicates that the connector 212 is in contact with the electrode sheet 5 and the controller 4 will not control the movement of the power mechanism 211. And when the received applied force value is less than the applied force threshold, it indicates that that connector 212 is not in contact with electrode sheet 5, there may be a wavy edge of the electrode sheet here, and now the controller 4 may control the power mechanism 211 to move, and the power mechanism 211 moves together with the connector 212 toward a position close to the wavy edge of the electrode sheet until the received applied force value reaches the applied force threshold again.

For example, it is assumed that the preset applied force threshold in the controller 4 is 2N, when the controller 4 receives that the applied force value transmitted by the pressure sensor 221 is 2N, it is considered that the electrode sheet 5 does not have a wavy edge at the current detection position; when the controller 4 receives the applied force value transmitted by the pressure sensor 221 is less than 2N, it is considered that the electrode sheet 5 has a wavy edge at the current detection position, then the controller 4 can control the power mechanism 211 to move, so that the power mechanism 211 moves together with the connector 212 toward the wavy edge of the electrode sheet until the controller 4 receives that the applied force value transmitted by the pressure sensor 221 is equal to 2N.

It should be pointed out that, in the embodiment of the present application, the applied force threshold can be preset not only through the controller 4, but also through other parameter setting devices, which is not limited in the embodiment of the present application.

The controller 4 is connected to the pressure sensor 221 and the power mechanism 211, so that the controller 4 can obtain the applied force value between the connector 212 and the wavy edge of the electrode sheet that is sensed by the pressure sensor 221 in real time and control the moving distance of the power mechanism 211 in real time based on the obtained applied force value, so as to detect the wavy edge of the electrode sheet while avoiding the damage to the electrode sheet 5 due to the excessive amplitude of the movement of the connector 212 .

In some embodiments, the controller 4 is further coupled to the displacement detecting member 222, and the controller 4 is further configured to receive the displacement sent by the displacement detecting member 222 and determine a wavy edge level of the electrode sheet 5 according to the displacement, the wavy edge level is a ratio of the displacement to a distance between two passing rollers 6 supporting the electrode sheet 5.

Based on the foregoing description, the displacement detecting member 222 may detect the displacement of the movable assembly 21 in real time. When the controller 4 is connected to the displacement detecting member 222, the displacement detecting member 222 may send the detected displacement of the movable assembly 21 to the controller 4 in real time. Accordingly, the controller 4 may receive the displacement of the movable assembly 21 sent by the displacement detecting member 222, and the wavy edge level of the electrode sheet 5 can be obtained by dividing the displacement by the distance between the two passing rollers 6 supporting the electrode sheet 5.

The controller 4 is connected to the displacement detecting member 222, so that the controller 4 can obtain the displacement of the power mechanism 211 and the connector 212 moving toward the wavy edge of the electrode sheet that is detected by the displacement detecting member in real time, and the wavy edge of the electrode sheet can be accurately detected based on the obtained displacement. In addition, by introducing the concept of wavy edge level, the uniform measurement of the wavy edge of the electrode sheet can be realized under the conveying of different detecting machines.

Please continue to refer to FIG. 5, in some embodiments, the apparatus for detecting the wavy edge of the electrode sheet further includes: a second detecting assembly 3, disposed on a midline of a width direction of the electrode sheet 5 and movably coupled to the supporting member 1. The second detecting assembly 3 has a same structure as the first detecting assembly 2, and the second detecting assembly 3 is configured to determine an initial position of the first detecting assembly 2.

The second detecting assembly 3 may be disposed at a position opposite to the non-wavy edge portion of the electrode sheet 5 to provide a reference for the first detecting assembly 2. In some examples, the second detecting assembly 3 may provide a reference of an initial position of the movable assembly 21 for the first detecting assembly 2. The second detecting assembly 3 may be disposed on a midline portion of the length of the electrode sheet 5 because there is the least possibility of a wavy edge at the midline of the length of the electrode sheet 5. In this way, the errors caused by the initial position can be reduced, and the accuracy for detecting the displacement of movement of the movable assembly 21 can be improved.

In addition, since there is the least possibility of wavy edges at the midline of the width direction of the electrode sheet 5, it can be ensured that the applied force between the second detecting assembly 3 and the electrode sheet 5 is always maintained in a constant state, so as to ensure that the applied force between the wavy edge of the electrode sheet and the movable assembly 21 is accurate, thereby ensuring that the controller 4 precisely controls displacement of the movement of the power mechanism 211 and the connector 212 in the movable assembly 21, and ensuring the accuracy of the detection of the wavy edge of the electrode sheet without damaging the electrode sheet 5.

The second detecting assembly is disposed at the midline position of the width direction of the electrode sheet, which can facilitate that the second detecting assembly 3 provides the controller 4 with the initial position of the movable assembly 21 and the applied force threshold between the movable assembly 21 and the electrode sheet 5; and with the initial position, the displacement of movement of the movable assembly 21 is further obtained, and with the applied force threshold, the applied force between the movable assembly 21 and the electrode sheet 5 is further determined, and finally the precise detection of the wavy edge of the electrode sheet is realized.

Please continue to refer to FIG. 5, in some embodiments, as shown in FIG. 5, the first detecting assembly 2 and the second detecting assembly 3 are disposed side by side in a width direction of the electrode sheet 5.

Since the two sides of the electrode sheet 5 in the width direction are positions where a wavy edge most likely to be generated and the side-by-side positions of the electrode sheet 5 in the width direction usually have a wavy edge only at one side, the first detecting assembly 2 and the second detecting assembly 3 are distributed at positions where a wavy edge is most likely to appear, specifically, the first detecting assembly 2 and the second detecting assembly 3 may be arranged as shown in FIG. 5, such that the second detecting assembly 3 can provide the controller 4 with the initial position of the power mechanism 211 and the applied force threshold between the connector 212 and the electrode sheet 5, and the first detecting assembly 2 can detect whether the electrode sheet has a wavy edge.

The first detecting assembly 2 and the second detecting assembly 3 are distributed at the positions where the wavy edge on the electrode sheet 5 is most likely to appear, which can facilitate that the controller 4 obtains the initial position of the power mechanism 211 or the connector 212 in the first detecting assembly 2 and controls the magnitude and direction of the displacement of movement of the power mechanism 211 in the first detecting assembly 2, thereby realizing accurate detection of the wavy edge of the electrode sheet based on the initial position and displacement.

Please continue to refer to FIG. 4, in some embodiments, the connector 212 is provided with a flexible member 213, and the flexible member 213 is configured to be in contact with the electrode sheet 5.

The flexible member 213 may be rubber, a cotton ball, a rubber ball, or the like. The flexible member 213 may be sleeved on an outer surface of the connector 212, may also be fixed in a fixing groove opened at the bottom of the connector 212, and may also be fixed at the bottom of the connector 212 by means of glue. The flexible member 213 may prevent the connector 212 from scratching the electrode sheet 5 when the connector 212 is in contact with the electrode sheet 5.

The provision of the flexible member 213 can prevent the detecting apparatus from scratching the electrode sheet 5 during detection.

In an embodiment of the present application, a method for detecting a wavy edge of an electrode sheet is provided, which adopts the apparatus for detecting the wavy edge of the electrode sheet described foregoing, and the method for detecting the wavy edge of the electrode sheet is specifically as follows:
providing an electrode sheet 5 and two passing rollers 6 and placing the electrode sheet 5 on the two passing rollers 6 for conveying; and
bringing the movable assembly 21 into contact with the electrode sheet 5 and detecting, by the detecting member 22, movement of the movable assembly 21, so as to detect a wavy edge of the electrode sheet 5.

In the method for detecting the wavy edge of the electrode sheet of the embodiment of the present application, during use, the electrode sheet 5 is placed on two passing rollers 6 for conveying, and the movable assembly 21 is in contact with the electrode sheet 5, and as the electrode sheet 5 is conveyed, when the movable assembly 21 encounters a loose wavy edge, to ensure that the movable assembly 21 is in contact with the electrode sheet 5, the movable assembly 21 needs to move in a direction close to the electrode sheet 5. Therefore, whether the electrode sheet 5 has a wavy edge at the current position can be determined by the detecting member 22 detecting the movement of the movable assembly 21, the detection accuracy is high, the detection operation is simple and fast, and the detection efficiency is high.

In an embodiment of the present application, an apparatus for detecting a wavy edge of an electrode sheet is provided, and the apparatus for detecting the wavy edge of the electrode sheet can accurately detect the wavy edge on the electrode sheet 5.

In this embodiment, as shown in FIGS. 1 to 3, the apparatus for detecting the wavy edge of the electrode sheet includes a supporting member 1 and a first detecting assembly 2. The first detecting assembly 2 includes a movable assembly 21 and a detecting member 22. The movable assembly 21 is coupled to the supporting member 1, and the movable assembly 21 is configured to be in contact with the electrode sheet 5; the detecting member 22 includes a pressure sensor 221, and the pressure sensor 221 is mounted on the movable assembly 21, and is capable of detecting an applied force between the electrode sheet 5 and the movable assembly 21.

It can be understood that the supporting member 1 is a mounting base of the first detecting assembly 2, playing a role in supporting and fixing the first detecting assembly 2. Meanwhile, the supporting and fixing of the entire the apparatus for detecting the wavy edge of the electrode sheet can also be realized by mounting the supporting member 1 on an external component. Specifically, the supporting member 1 is detachably mounted on a crossbeam above the passing roller 6, so that the entire apparatus for detecting the wavy edge of the electrode sheet can be fixed above the electrode sheet 5 to facilitate the supporting member 1 being in contact with the electrode sheet 5.

The first detecting assembly 2 is configured to detect whether the electrode sheet 5 has a wavy edge; specifically, the first detecting assembly 2 includes a movable assembly 21 and a detecting member 22, and the movable assembly 21 refers to a component configured to be in contact with the electrode sheet 5. It should be noted that when the movable assembly 21 is in contact with the electrode sheet 5, an interaction force exists between the movable assembly 21 and the electrode sheet 5, and the pressure sensor 221 in the detecting member 22 can detect the force. It should also be noted that the degree of the tightness of the non-wavy edge portion of the electrode sheet 5 is inconsistent with that of the wavy edge portion of the electrode sheet 5; compared with the non-wavy edge portion of the electrode sheet 5, the degree of the tightness of the wavy edge portion of the electrode sheet 5 is low.

In the apparatus for detecting the wavy edge of the electrode sheet of the embodiment of the present application, during use, the electrode sheet 5 is placed on two passing rollers 6, and is conveyed forward by the passing rollers 6, and the supporting member 1 and the first detecting assembly 2 are moved to positions between the two passing rollers, and the movable assembly 21 is in contact with the electrode sheet 5. As the electrode sheet 5 is conveyed, if the electrode sheet 5 does not have a wavy edge, the degree of tightness of each portion of the electrode sheet 5 in contact with the movable assembly 21 is the same or slightly differs, and therefore a contact force between the movable assembly 21 and the electrode sheet 5 will not change or change slightly, and the applied force detected by the pressure sensor 221 will not change or change slightly. If the electrode sheet 5 has a wavy edge, when the movable assembly 21 moves to the loose wavy edge of the electrode sheet, the applied force between the movable assembly 21 and the electrode sheet 5 is greatly reduced, or even the movable assembly 21 is separated from the electrode sheet 5, and there is no applied force between them. At this time, the applied force detected by the pressure sensor 221 changes greatly, so that the change in the applied force can be detected by the pressure sensor 221, thereby realizing accurate detection of the wavy edge of the electrode sheet. Thus, detection accuracy and the detection efficiency are high.

In some embodiments, the pressure sensor 221 may be a semiconductor piezoresistive dispersion pressure sensor. Its principle is that a surface of a sheet undergo a semiconductor deformation applied force, and the sheet is deformed by an external force to generate a piezoresistive effect, so that the change in resistance is converted into an electrical signal.

In another embodiment, the movable assembly 21 may abut against the electrode sheet 5 with a preset applied force threshold; if the electrode sheet 5 has a wavy edge, the applied force value detected by the pressure sensor 221 is equal to the applied force threshold or does not differ much from the applied force threshold; if the electrode sheet 5 has a wavy edge, when the movable assembly 21 is in contact with the loose wavy edge of the electrode sheet, the applied force between the movable assembly 21 and the electrode sheet 5 is much smaller than the applied force threshold. At this time, the applied force detected by the pressure sensor 221 is also much smaller than the applied force threshold, so it can be determined that the electrode sheet 5 has a wavy edge at the current position, and thus accurate detection of the wavy edge can also be realized. The applied force threshold can be selected according to actual conditions, and is not limited here.

In another embodiment of the present application, please also refer to FIG. 4, the movable assembly of the apparatus for detecting the wavy edge of the electrode sheet provided a power mechanism 211 and a connector 212 configured to be in contact with the electrode sheet 5, the power mechanism 211 is coupled to the connector 212; the pressure sensor 221 is coupled between the power mechanism 211 and the connector 212 and the pressure sensor 221 is configured to detect an applied force between the connector 212 and the electrode sheet 5; and the power mechanism 211 is coupled to the supporting member 1.

It can be understood that the power mechanism 211 plays the role of connecting the supporting member 1 and the connector 212, so as to ensure that the connector 212 can be stably in contact with the electrode sheet 5 and ensure the detection accuracy. In addition, the pressure sensor 221 is coupled between the power mechanism 211 and connector 212, the force applied to the connector 212 by the electrode sheet 5 is transmitted to the pressure sensor 221 through the connector 212, and the applied force between the electrode sheet 5 and the connector 212 is detected by the pressure sensor 221.

In another embodiment of the present application, a detecting part of the pressure sensor 221 of the apparatus for detecting the wavy edge of the electrode sheet provided is in contact with the power mechanism 211, it should be noted that the detecting part of the pressure sensor 221 refers to a portion where the applied force can be detected by the pressure sensor 221. In a specific application, the force applied to the connector 212 by the electrode sheet 5 is transmitted to the power mechanism 211 through the connector 212, and the detecting part of the pressure sensor 221 is in contact with the power mechanism 211, and thus the applied force can be detected, and in this way the applied force between the electrode sheet 5 and the connector 212 is detected.

In another embodiment of the present application, the detecting part of the pressure sensor 221 of the apparatus for detecting the wavy edge of the electrode sheet provided is in contact with the connector 212. In such arrangement, the force applied to the connector 212 by the electrode sheet 5 can be directly detected by the detecting part of the pressure sensor 221, thus realizing sensing of the applied force between the electrode sheet 5 and the connector 212.

In some embodiments of the present application, as shown in FIG. 5, the apparatus for detecting the wavy edge of the electrode sheet includes a controller 4, the pressure sensor 221 is electrically connected to the controller 4, and the controller 4 is configured to receive an applied force value sent by the pressure sensor 221 and determine whether the electrode sheet has a wavy edge. Further, the controller 4 itself, a computer connected to the controller 4, or other devices may output identifiable wavy edge information of the electrode sheet, which may specifically be a visual signal, an audio signal, or the like. The controller 4 can accurately receive the applied force value sent by the pressure sensor 221 in real time, so as to accurately determine whether the electrode sheet 5 has a wavy edge, and improve detection efficiency and detection accuracy.

In another embodiment of the present application, as shown in FIG. 2 and FIG. 3, the power mechanism 211 of the apparatus for detecting the wavy edge of the electrode sheet provided is movably coupled to the supporting member 1, such that the power mechanism 211 is capable of moving toward a position close to the electrode sheet 5 relative to the supporting member 1; the controller 4 is electrically connected to the power mechanism 211, and the controller 4 is configured to receive an applied force value sent by the pressure sensor 221 and control movement of the power mechanism 211 according to the applied force value.

The power mechanism 211 can drive the power mechanism 211 to move toward the electrode sheet 5 relative to the supporting member 1, while the connector 212 may move toward the electrode sheet 5 together with the power mechanism 211.

In some embodiments, as shown in FIG. 3 and FIG. 4, the supporting member 1 is provided with a rack, a gear is dispose at an inner portion of the power mechanism 211, and the gear is engaged with the rack, so that the power mechanism 211 can drive the gear to rotate, thereby making the entire movable assembly 21 move relative to the supporting member 1; and specifically, the gear may be a helical gear.

The connector 212 may be a connecting rod, a connecting column, or the like, and the shape of the connector 212 may be a cylinder, a prism, or the like. The connector 212 may be coupled to the power mechanism 211, and the specific connection method may be socketing, bonding, or the like.

The controller 4 can receive the applied force value fed back by the pressure sensor 221, and control the movement of the power mechanism 211 according to the applied force value. In a practical application process, the applied force threshold is set in the controller 4, when the connector 212 is in contact with the electrode sheet 5, the pressure sensor 221 can detect the applied force value between the connector 212 and the electrode sheet 5 and feeds back the applied force value to the controller 4; and the controller 4 compares the applied force value fed back by the pressure sensor 221 with the applied force threshold. If the two values are equal or slightly differ, it can be determined that the electrode sheet 5 does not have a wavy edge at the current position; at the same time, the controller 4 feeds back to the power mechanism 211 the signal, so that the power mechanism 211 does not move, reducing the damage to the electrode sheet 5; or, the controller 4 does not feed back to the power mechanism 211 the signal, and the power mechanism 211 does not move under the condition that the feedback signal is not received. If the two values differs greatly, the controller 4 can determine that the electrode sheet 5 has a wavy edge at the current position; at the same time, the controller 4 can control the power mechanism 211 to move toward the electrode sheet 5, and when the pressure sensor 221 detects that the applied force value between the electrode sheet 5 and the connector 212 is equal to the applied force threshold again, the movement of the power mechanism 211 can be stopped to reduce the damage to the electrode sheet 5. In addition, when measuring the wavy edge of the electrode sheet, the moving distance of the power mechanism 211 can be obtained with the same applied force threshold through the wavy edge of the electrode sheet, which can reduce the error of the moving distance of the power mechanism 211 caused by different applied forces between the electrode sheet 5 and the wavy edge, to improve the accuracy of measurement result for the wavy edge level of the electrode sheet. Furthermore, the controller 4 and the pressure sensor 221 controls the movement of the power mechanism 211, automated testing of the wavy edge of the electrode sheet can be achieved, which is more efficient and more accurate, and also reduces damage to the electrode sheet 5. For a specific example, reference is made to the foregoing description that the applied force threshold is 2N.

In another embodiment of the present application, in conjunction with FIG. 2, FIG. 3, and FIG. 4, the detecting member 22 of the apparatus for detecting the wavy edge of the electrode sheet provided also includes a displacement detecting member 222, the displacement detecting member 222 is coupled to the power mechanism 211, and the displacement detecting member 222 is configured to detect the displacement of the movable assembly 21.

The displacement detecting member 222 can move with the power mechanism 211, and the displacement detecting member 222 can detect the moving distance of the power mechanism 211, and the moving distance of the power mechanism 211 is equal to the moving distance of the connector 212. Furthermore, the displacement detecting member 222 can accurately detect the displacement of movement of the connector 212 at the wavy edge of the electrode sheet, so that the wavy edge level of the electrode sheet can be quantified more precisely, so that the tightness of the wavy edge of the electrode sheet can be more clearly and accurately understood.

In some embodiments, the displacement detecting member 222 may be a magnetically sensitive displacement sensor, a photoelectric displacement sensor, a magnetostrictive displacement sensor, a digital laser displacement sensor, or the like. The magnetostrictive displacement sensor accurately detects an absolute position of a movable magnetic ring through an internal non-contact measurement and control technology to measure an actual displacement value of the detected product; and the laser displacement sensor can accurately measure the position, displacement and other changes of the measured object in a non-contact manner.

Please continue to refer to FIG. 3, in some embodiments, the supporting member 1 is provided with a measuring tool 223, the measuring tool 223 is opposite to the displacement detecting member 222 in terms of position, and the displacement detector 222 reads the displacement of the movable assembly 21 through the measuring tool 223.

The measuring tool 223 may be an optical ruler, or may be a scale mark disposed on the supporting member 1 and opposite to the displacement of the displacement detecting member 222. Specifically, the optical ruler is obtained by plating and engraving multiple stripes with a width of 1µ on the 3mm attached glass using a moiré fringe of a grating plate and photoelectric conversion technology to form a transparent length ruler, which is then adhered to an aluminum ruler. The optical ruler performs measurement by light refraction or transmission feedback to the grating displacement sensor.

When the measuring tool 223 is an optical ruler, the displacement detecting member 222 is a grating displacement sensor, and specifically, the grating displacement sensor is composed of a main grating and a secondary grating in a pair of grating pairs, and receives a regular fringe pattern (moiré fringes) between black and white generated under the combined action of light interference and diffraction, and converts the black- and-white fringe pattern into an electrical signal with a change in sine waves by the photoelectric device, and obtains two sine waves or square waves with a phase difference of 90° after amplification by an amplifier and shaping by a shaping circuit, and sends the same to a grating digital readout for counting and displaying.

In another embodiment of the present application, in conjunction with FIG. 4 and FIG. 5, the controller 4 of the apparatus for detecting the wavy edge of the electrode sheet provided is electrically connected to the displacement detecting member 222, and the controller 4 is further configured to receive the displacement sent by the displacement detecting member 222, and determine a wavy edge level of the electrode sheet 5 according to the displacement, the wavy edge level is a ratio of the displacement to a distance between two passing rollers 6 supporting the electrode sheet 5.

It can be understood that the displacement of movement of the power mechanism 222 detected by the displacement detecting member 211 can be sent to the controller 4, and the controller 4 can perform an operation on the displacement and the distance between the two passing rollers 6 to obtain the specific value of the wavy edge level of the electrode sheet 5, so as to accurately quantify the wavy edge level of the electrode sheet and make the detection and evaluation of the wavy edge of the electrode sheet more accurate. Meanwhile, as for the concept of wavy edge level, the distance between the two passing rollers 6 is introduced, so that the wavy edge of the electrode sheet can be measured under the conveying of different detecting machines.

In another embodiment of the present application, the connector 212 of the apparatus for detecting the wavy edge of the electrode sheet is provided with a smooth rigid member at one end that is in contact with the electrode sheet 5; it can be understood that the connector 212 is provided with a smooth rigid member, the smooth rigid member is configured to be in contact with the electrode sheet 5. On the one hand, it reduces the sliding friction forces between the connector 212 and the electrode sheet 5, reducing damage to the electrode sheet 5. On the other hand, the rigid member can transmit the applied force more accurately, improving the detection sensitivity and precision.

In another embodiment of the present application, as shown in FIG. 5, the apparatus for detecting the wavy edge of the electrode sheet provided further includes a second detecting assembly 3, the second detecting assembly 3 having a same structure as the first detecting assembly 2; the movable assembly 21 in the second detecting assembly 3 is configured to be in contact with a midline portion of a width direction of the electrode sheet 5 and be coupled to the supporting member 1.

It should be noted that there is the least possibility of wavy edges at the midline portion of the width direction of the electrode sheet 5, so the movable assembly 21 of the first detecting assembly 2 and the movable assembly 21 of the second detecting assembly 3 are moved to the same height and are in contact with the electrode sheet 5, the contact force value between the movable assembly 21 of the second detecting assembly 3 and the electrode sheet 5 can be used as a reference for the absence of wavy edges on the electrode sheet 5. Furthermore, the contact force between the movable assembly 21 in the second detecting assembly 3 and the electrode sheet 5 serves as an applied force threshold in the first detecting assembly 2, so that the applied force threshold of the first detecting assembly 2 is updated in real time, thereby reducing the influence of small changes in the degree of tightness caused by preparation factors or installation factors of the electrode sheet 5, and improving the accuracy of whether a wavy edge exists at the current position where the first detecting assembly is in contact with.

In another embodiment of the present application, as shown in FIG. 5, the apparatus for detecting the wavy edge of the electrode sheet provided also includes a controller 4, and the controller 4 is connected to the pressure sensor 221 and the second detecting assembly 3. Specifically, the controller 4 may collect the applied force value detected by the pressure sensor 221 in the second detecting assembly 3 in real time and update the same as the applied force threshold of the first detecting assembly 2, and in this way, updating in real time can be realized and errors can be reduced, which is conducive to improving detection accuracy.

In an embodiment of the present application, a method for detecting a wavy edge of an electrode sheet is provided, which adopts the apparatus for detecting the wavy edge of the electrode sheet described foregoing, and the method for detecting the wavy edge of the electrode sheet is specifically as follows:
providing an electrode sheet 5 and two passing rollers 6 and placing the electrode sheet 5 on the two passing rollers 6 for conveying; and

bringing the movable assembly 21 into contact with the electrode sheet 5 and detecting, by the detecting member 22, movement of the movable assembly 21, so as to detect a wavy edge of the electrode sheet 5. In the method for detecting the wavy edge of the electrode sheet of the embodiment of the present application, during use, the electrode sheet 5 is placed on two passing rollers 6 for conveying, and the movable assembly 21 is in contact with the electrode sheet 5; and as the electrode sheet 5 is conveyed, when the movable assembly 21 encounter a looser wavy edge part, the applied force between the movable assembly 21 and the electrode sheet 5 is greatly reduced, or even the movable assembly 21 is separated from the electrode sheet 5, and there is no applied force between them. At this time, the applied force detected by the pressure sensor 221 changes greatly, so that the change in the applied force can be detected by the pressure sensor 221, thereby realizing accurate detection of the wavy edge of the electrode sheet. Thus, detection accuracy and the detection efficiency are high.

It will be appreciated by a person of skill in the art that, although some embodiments herein include some but not other features included in other embodiments, combinations of features from different embodiments are intended to be within the scope of the appended claims and form different embodiments. For example, in the claims, any of the embodiments sought for protection may be used in any combination.

## Claims

1. An apparatus for detecting a wavy edge of an electrode sheet, comprising:
a supporting member (1); and
a first detecting assembly (2), the first detecting assembly (2) comprising a movable assembly (21) and a detecting member (22);
wherein the movable assembly (21) is movably coupled to the supporting member (1), and the movable assembly (21) is configured to move along the supporting member (1) in a direction close to an electrode sheet (5), to be in contact with the electrode sheet (5); and
the detecting member (22) is fixed on the movable assembly (21), and the detecting member (22) is configured to detect a wavy edge of the electrode sheet (5) based on movement of the movable assembly (21);
wherein the apparatus further comprises:
a second detecting assembly (3), disposed on a midline of a length direction of the electrode sheet (5) and movably coupled to the supporting member (1), the second detecting assembly (3) having a same structure as the first detecting assembly (2), and the second detecting assembly (3) being configured to determine an initial position of the first detecting assembly (2).

2. The apparatus for detecting the wavy edge of the electrode sheet according to claim 1, wherein the movable assembly (21) comprises:
a power mechanism (211), movably coupled to the supporting member (1); and
a connector (212), coupled to the power mechanism (211), the connector (212) being configured to move with the power mechanism (211) toward a position close to the electrode sheet (5), to be in contact with the electrode sheet (5).

3. The apparatus for detecting the wavy edge of the electrode sheet according to claim 2, wherein the detecting member (22) comprises a pressure sensor (221) coupled between the power mechanism (211) and the connector (212), the pressure sensor (221) is configured to sense an applied force between the connector (212) and the electrode sheet (5), and the movable assembly (21) moves with a variation of the applied force.

4. The apparatus for detecting the wavy edge of the electrode sheet according to claim 3, wherein the detecting member (22) further comprises a displacement detecting member (222) coupled to the power mechanism (211), and the displacement detecting member (222) is configured to detect displacement of the movable assembly (21).

5. The apparatus for detecting the wavy edge of the electrode sheet according to claim 4, wherein the supporting member (1) is provided with a measuring tool (223), the measuring tool (223) is opposite to the displacement detecting member (222) in terms of position, and the displacement detecting member (222) reads the displacement of the movable assembly (21) through the measuring tool (223).

6. The apparatus for detecting the wavy edge of the electrode sheet according to claim 4, further comprising:
a controller (4), the controller (4) being electrically connected to the pressure sensor (221) and the power mechanism (211), and the controller (4) being configured to receive an applied force value sent by the pressure sensor (221) and control movement of the power mechanism (211) according to the applied force value.

7. The apparatus for detecting the wavy edge of the electrode sheet according to claim 6, wherein the controller (4) is further coupled to the displacement detecting member (222), the controller (4) is further configured to receive displacement sent by the displacement detecting member (222) and determine a wavy edge level of the electrode sheet (5) according to the displacement, and the wavy edge level is a ratio of the displacement to a distance between two passing rollers (6) supporting the electrode sheet (5).

8. The apparatus for detecting the wavy edge of the electrode sheet according to claim 1, wherein the first detecting assembly (2) and the second detecting assembly (3) are arranged side by side in a width direction of the electrode sheet (5).

9. The apparatus for detecting the wavy edge of the electrode sheet according to claim 2, wherein the connector (212) is provided with a flexible member (213), and the flexible member (213) is configured to be in contact with the electrode sheet (5).

10. A method for detecting a wavy edge of an electrode sheet, wherein the method for detecting the wavy edge of the electrode sheet adopts the apparatus for detecting the wavy edge of the electrode sheet according to any one of claims 1 to 9, and the method for detecting the wavy edge of the electrode sheet is as follows:
providing an electrode sheet (5) and two passing rollers (6) and placing the electrode sheet (5) on the two passing rollers (6) for conveying; and
bringing the movable assembly (21) into contact with the electrode sheet (5) and detecting, by the detecting member (22), movement of the movable assembly (21), so as to detect a wavy edge of the electrode sheet (5).

11. An apparatus for detecting a wavy edge of an electrode sheet, comprising:
a supporting member (1); and
a first detecting assembly (2), the first detecting assembly (2) comprising a movable assembly (21) and a detecting member (22), the movable assembly (21) being coupled to the supporting member (1) and being configured to be in contact with the electrode sheet (5);
wherein the detecting member (22) comprises a pressure sensor (221), and the pressure sensor (221) is mounted on the movable assembly (21) and is capable of detecting an applied force between the electrode sheet (5) and the movable assembly (21), preferably wherein the movable assembly (21) comprises a power mechanism (211) and a connector (212) configured to be in contact with the electrode sheet (5), the power mechanism (211) is coupled to the connector (212); the pressure sensor (221) is coupled between the power mechanism (211) and the connector (212) and is configured to detect an applied force between the connector (212) and the electrode sheet (5); and the power mechanism (211) is coupled to the supporting member (1);
wherein the apparatus further comprises:
a second detecting assembly (3), disposed on a midline of a length direction of the electrode sheet (5) and movably coupled to the supporting member (1), the second detecting assembly (3) having a same structure as the first detecting assembly (2), and the second detecting assembly (3) being configured to determine an initial position of the first detecting assembly (2).

12. The apparatus for detecting the wavy edge of the electrode sheet according to claim 11, wherein a detecting part of the pressure sensor (221) is in contact with the power mechanism (211) or the connector (212).

13. The apparatus for detecting the wavy edge of the electrode sheet according to claim 11, further comprising a controller (4), the controller (4) being electrically connected to the pressure sensor (221), the controller (4) being configured to receive an applied force value sent by the pressure sensor (221) and determine whether the electrode sheet (5) has a wavy edge according to the applied force value, preferably wherein the power mechanism (211) is movably coupled to the supporting member (1), such that the power mechanism (211) is capable of moving toward a position close to the electrode sheet (5) relative to the supporting member (1); the controller (4) is electrically connected to the power mechanism (211), and the controller (4) is configured to receive an applied force value sent by the pressure sensor (221) and control movement of the power mechanism (211) according to the applied force value, more preferably wherein the detecting member (22) further comprises a displacement detecting member (222) coupled to the power mechanism (211), and the displacement detecting member (222) is configured to detect displacement of the power mechanism (211), even more preferably wherein the controller (4) is further electrically connected to the displacement detecting member (222), the controller (4) is further configured to receive displacement sent by the displacement detecting member (222) and determine a wavy edge level of the electrode sheet (5) according to the displacement, and the wavy edge level is a ratio of the displacement to a distance between two passing rollers (6) supporting the electrode sheet (5).

14. The apparatus for detecting the wavy edge of the electrode sheet according to any one of claims 11 to 13, wherein one end of the connector (212) that is configured to be in contact with the electrode sheet (5) is provided with a smooth rigid member (213), or further comprising a second detecting assembly (3), the second detecting assembly (3) having a same structure as the first detecting assembly (2); the movable assembly (21) in the second detecting assembly (3) is configured to be in contact with a midline portion of a width direction of the electrode sheet (5) and be coupled to the supporting member (1), preferably further comprising a controller (4), and the controller (4) being coupled to the pressure sensor (221) and the second detecting assembly (3).

15. A method for detecting a wavy edge of an electrode sheet, wherein the method for detecting the wavy edge of the electrode sheet adopts the apparatus for detecting the wavy edge of the electrode sheet according to any one of claims 11 to 14, and the method for detecting the wavy edge of the electrode sheet is as follows:
providing an electrode sheet (5) and two passing rollers (6) and placing the electrode sheet (5) on the two passing rollers (6) for conveying; and
bringing the movable assembly (21) into contact with the electrode sheet (5) and detecting, by the pressure sensor (221), a variation of an applied force between the movable assembly (21) and the electrode sheet (5), so as to detect a wavy edge of the electrode sheet (5).

## Patentansprüche

1. Vorrichtung zum Detektieren einer welligen Kante eines Elektrodenblatts, umfassend:
ein Stützelement (1); und
eine erste Detektionsbaugruppe (2), wobei die erste Detektionsbaugruppe (2) eine bewegliche Baugruppe (21) und ein Detektionselement (22) umfasst;
wobei die bewegliche Baugruppe (21) beweglich mit dem Stützelement (1) gekoppelt ist und die bewegliche Baugruppe (21) dazu ausgebildet ist, sich entlang dem Stützelement (1) in einer Richtung nahe zu einem Elektrodenblatt (5) zu bewegen, um mit dem Elektrodenblatt (5) in Kontakt zu sein; und
das Detektionselement (22) an der beweglichen Baugruppe (21) befestigt ist und das Detektionselement (22) dazu ausgebildet ist, eine wellige Kante des Elektrodenblatts (5) basierend auf einer Bewegung der beweglichen Baugruppe (21) zu detektieren;
wobei die Vorrichtung weiterhin umfasst:
eine zweite Detektionsbaugruppe (3), die auf einer Mittellinie einer Längsrichtung des Elektrodenblatts (5) angeordnet und beweglich mit dem Stützelement (1) gekoppelt ist, wobei die zweite Detektionsbaugruppe (3) eine gleiche Struktur wie die erste Detektionsbaugruppe (2) aufweist und die zweite Detektionsbaugruppe (3) dazu ausgebildet ist, eine Anfangsposition der ersten Detektionsbaugruppe (2) festzustellen.

2. Vorrichtung zum Detektieren der welligen Kante des Elektrodenblatts nach Anspruch 1,
wobei die bewegliche Baugruppe (21) umfasst:
einen Kraftmechanismus (211), der beweglich mit dem Stützelement (1) gekoppelt ist; und
einen Verbinder (212), der mit dem Kraftmechanismus (211) gekoppelt ist, wobei der Verbinder (212) dazu ausgebildet ist, sich mit dem Kraftmechanismus (211) zu einer Position nahe dem Elektrodenblatt (5) hin zu bewegen, um mit dem Elektrodenblatt (5) in Kontakt zu sein.

3. Vorrichtung zum Detektieren der welligen Kante des Elektrodenblatts nach Anspruch 2, wobei das Detektionselement (22) einen Drucksensor (221) umfasst, der zwischen den Kraftmechanismus (211) und den Verbinder (212) gekoppelt ist, der Drucksensor (221) dazu ausgebildet ist, eine aufgebrachte Kraft zwischen dem Verbinder (212) und dem Elektrodenblatt (5) zu erfassen, und die bewegliche Baugruppe (21) sich mit einer Variation der aufgebrachten Kraft bewegt.

4. Vorrichtung zum Detektieren der welligen Kante des Elektrodenblatts nach Anspruch 3, wobei das Detektionselement (22) weiterhin ein Verschiebungsdetektionselement (222) umfasst, das mit dem Kraftmechanismus (211) gekoppelt ist, und das Verschiebungsdetektionselement (222) dazu ausgebildet ist, eine Verschiebung der beweglichen Baugruppe (21) zu detektieren.

5. Vorrichtung zum Detektieren der welligen Kante des Elektrodenblatts nach Anspruch 4, wobei das Stützelement (1) mit einem Messwerkzeug (223) versehen ist, das Messwerkzeug (223) dem Verschiebungsdetektionselement (222) in Bezug auf die Position gegenüberliegt und das Verschiebungsdetektionselement (222) die Verschiebung der beweglichen Baugruppe (21) durch das Messwerkzeug (223) liest.

6. Vorrichtung zum Detektieren der welligen Kante des Elektrodenblatts nach Anspruch 4, weiterhin umfassend:
eine Steuerung (4), wobei die Steuerung (4) elektrisch mit dem Drucksensor (221) und dem Kraftmechanismus (211) verbunden ist und die Steuerung (4) dazu ausgebildet ist,
einen von dem Drucksensor (221) gesendeten Wert der aufgebrachten Kraft zu empfangen und eine Bewegung des Kraftmechanismus (211) gemäß dem Wert der aufgebrachten Kraft zu steuern.

7. Vorrichtung zum Detektieren der welligen Kante des Elektrodenblatts nach Anspruch 6, wobei die Steuerung (4) weiterhin mit dem Verschiebungsdetektionselement (222) gekoppelt ist, die Steuerung (4) weiterhin dazu ausgebildet ist, eine von dem Verschiebungsdetektionselement (222) gesendete Verschiebung zu empfangen und einen Grad der welligen Kante des Elektrodenblatts (5) gemäß der Verschiebung festzustellen, und der Grad der welligen Kante ein Verhältnis der Verschiebung zu einem Abstand zwischen zwei das Elektrodenblatt (5) tragenden Durchlaufrollen (6) ist.

8. Vorrichtung zum Detektieren der welligen Kante des Elektrodenblatts nach Anspruch 1, wobei die erste Detektionsbaugruppe (2) und die zweite Detektionsbaugruppe (3) in einer Breitenrichtung des Elektrodenblatts (5) nebeneinander angeordnet sind.

9. Vorrichtung zum Detektieren der welligen Kante des Elektrodenblatts nach Anspruch 2, wobei der Verbinder (212) mit einem flexiblen Element (213) versehen ist und das flexible Element (213) dazu ausgebildet ist, mit dem Elektrodenblatt (5) in Kontakt zu sein.

10. Verfahren zum Detektieren einer welligen Kante eines Elektrodenblatts, wobei das Verfahren zum Detektieren der welligen Kante des Elektrodenblatts die Vorrichtung zum Detektieren der welligen Kante des Elektrodenblatts nach einem der Ansprüche 1 bis 9 verwendet und das Verfahren zum Detektieren der welligen Kante des Elektrodenblatts wie folgt lautet:
Bereitstellen eines Elektrodenblatts (5) und zweier Durchlaufrollen (6) und Platzieren des Elektrodenblatts (5) auf den zwei Durchlaufrollen (6) zum Fördern; und
In-Kontakt-Bringen der beweglichen Baugruppe (21) mit dem Elektrodenblatt (5) und Detektieren, durch das Detektionselement (22), einer Bewegung der beweglichen Baugruppe (21), um so eine wellige Kante des Elektrodenblatts (5) zu detektieren.

11. Vorrichtung zum Detektieren einer welligen Kante eines Elektrodenblatts, umfassend:
ein Stützelement (1); und
eine erste Detektionsbaugruppe (2), wobei die erste Detektionsbaugruppe (2) eine bewegliche Baugruppe (21) und ein Detektionselement (22) umfasst, wobei die bewegliche Baugruppe (21) mit dem Stützelement (1) gekoppelt und dazu ausgebildet ist, mit dem Elektrodenblatt (5) in Kontakt zu sein;
wobei das Detektionselement (22) einen Drucksensor (221) umfasst und der Drucksensor (221) an der beweglichen Baugruppe (21) montiert ist und in der Lage ist, eine aufgebrachte Kraft zwischen dem Elektrodenblatt (5) und der beweglichen Baugruppe (21) zu detektieren, vorzugsweise wobei die bewegliche Baugruppe (21) einen Kraftmechanismus (211) und einen Verbinder (212) umfasst, der dazu ausgebildet ist, mit dem Elektrodenblatt (5) in Kontakt zu sein, der Kraftmechanismus (211) mit dem Verbinder (212) gekoppelt ist; der Drucksensor (221) zwischen den Kraftmechanismus (211) und den Verbinder (212) gekoppelt ist und dazu ausgebildet ist, eine aufgebrachte Kraft zwischen dem Verbinder (212) und dem Elektrodenblatt (5) zu detektieren; und der Kraftmechanismus (211) mit dem Stützelement (1) gekoppelt ist;
wobei die Vorrichtung weiterhin umfasst:
eine zweite Detektionsbaugruppe (3), die auf einer Mittellinie einer Längsrichtung des Elektrodenblatts (5) angeordnet und beweglich mit dem Stützelement (1) gekoppelt ist, wobei die zweite Detektionsbaugruppe (3) eine gleiche Struktur wie die erste Detektionsbaugruppe (2) aufweist und die zweite Detektionsbaugruppe (3) dazu ausgebildet ist, eine Anfangsposition der ersten Detektionsbaugruppe (2) festzustellen.

12. Vorrichtung zum Detektieren der welligen Kante des Elektrodenblatts nach Anspruch 11, wobei ein Detektionsteil des Drucksensors (221) mit dem Kraftmechanismus (211) oder dem Verbinder (212) in Kontakt ist.

13. Vorrichtung zum Detektieren der welligen Kante des Elektrodenblatts nach Anspruch 11, weiterhin umfassend eine Steuerung (4), wobei die Steuerung (4) elektrisch mit dem Drucksensor (221) verbunden ist, die Steuerung (4) dazu ausgebildet ist, einen von dem Drucksensor (221) gesendeten Wert der aufgebrachten Kraft zu empfangen und gemäß dem Wert der aufgebrachten Kraft festzustellen, ob das Elektrodenblatt (5) eine wellige Kante aufweist, vorzugsweise wobei der Kraftmechanismus (211) beweglich mit dem Stützelement (1) gekoppelt ist, derart, dass der Kraftmechanismus (211) in der Lage ist, sich relativ zu dem Stützelement (1) zu einer Position nahe dem Elektrodenblatt (5) hin zu bewegen; die Steuerung (4) elektrisch mit dem Kraftmechanismus (211) verbunden ist und die Steuerung (4) dazu ausgebildet ist, einen von dem Drucksensor (221) gesendeten Wert der aufgebrachten Kraft zu empfangen und eine Bewegung des Kraftmechanismus (211) gemäß dem Wert der aufgebrachten Kraft zu steuern, weiter vorzugsweise wobei das Detektionselement (22) weiterhin ein Verschiebungsdetektionselement (222) umfasst, das mit dem Kraftmechanismus (211) gekoppelt ist, und das Verschiebungsdetektionselement (222) dazu ausgebildet ist, eine Verschiebung des Kraftmechanismus (211) zu detektieren, noch weiter vorzugsweise wobei die Steuerung (4) weiterhin elektrisch mit dem Verschiebungsdetektionselement (222) verbunden ist, die Steuerung (4) weiterhin dazu ausgebildet ist, eine von dem Verschiebungsdetektionselement (222) gesendete Verschiebung zu empfangen und einen Grad der welligen Kante des Elektrodenblatts (5) gemäß der Verschiebung festzustellen, und der Grad der welligen Kante ein Verhältnis der Verschiebung zu einem Abstand zwischen zwei das Elektrodenblatt (5) tragenden Durchlaufrollen (6) ist.

14. Vorrichtung zum Detektieren der welligen Kante des Elektrodenblatts nach einem der Ansprüche 11 bis 13, wobei ein Ende des Verbinders (212), das dazu ausgebildet ist, mit dem Elektrodenblatt (5) in Kontakt zu sein, mit einem glatten starren Element (213) versehen ist, oder weiterhin umfassend eine zweite Detektionsbaugruppe (3), wobei die zweite Detektionsbaugruppe (3) eine gleiche Struktur wie die erste Detektionsbaugruppe (2) aufweist; die bewegliche Baugruppe (21) in der zweiten Detektionsbaugruppe (3) dazu ausgebildet ist, mit einem Mittellinienabschnitt einer Breitenrichtung des Elektrodenblatts (5) in Kontakt zu sein und mit dem Stützelement (1) gekoppelt zu sein, vorzugsweise weiterhin umfassend eine Steuerung (4), wobei die Steuerung (4) mit dem Drucksensor (221) und der zweiten Detektionsbaugruppe (3) gekoppelt ist.

15. Verfahren zum Detektieren einer welligen Kante eines Elektrodenblatts, wobei das Verfahren zum Detektieren der welligen Kante des Elektrodenblatts die Vorrichtung zum Detektieren der welligen Kante des Elektrodenblatts nach einem der Ansprüche 11 bis 14 verwendet und das Verfahren zum Detektieren der welligen Kante des Elektrodenblatts wie folgt lautet:
Bereitstellen eines Elektrodenblatts (5) und zweier Durchlaufrollen (6) und Platzieren des Elektrodenblatts (5) auf den zwei Durchlaufrollen (6) zum Fördern; und
In-Kontakt-Bringen der beweglichen Baugruppe (21) mit dem Elektrodenblatt (5) und Detektieren, durch den Drucksensor (221), einer Variation einer aufgebrachten Kraft zwischen der beweglichen Baugruppe (21) und dem Elektrodenblatt (5), um so eine wellige Kante des Elektrodenblatts (5) zu detektieren.

## Revendications

1. Appareil de détection d'un bord ondulé d'une feuille d'électrode, comprenant :
un élément de support (1) ; et
un premier ensemble de détection (2), le premier ensemble de détection (2) comprenant un ensemble mobile (21) et un élément de détection (22) ;
dans lequel l'ensemble mobile (21) est couplé de manière mobile à l'élément de support (1), et l'ensemble mobile (21) est configuré pour se déplacer le long de l'élément de support (1) dans une direction proche d'une feuille d'électrode (5), pour être en contact avec la feuille d'électrode (5) ; et
l'élément de détection (22) est fixé sur l'ensemble mobile (21), et l'élément de détection (22) est configuré pour détecter un bord ondulé de la feuille d'électrode (5) sur la base d'un mouvement de l'ensemble mobile (21) ;
dans lequel l'appareil comprend en outre :
un second ensemble de détection (3), disposé sur une ligne médiane d'une direction de longueur de la feuille d'électrode (5) et couplé de manière mobile à l'élément de support (1), le second ensemble de détection (3) ayant une même structure que le premier ensemble de détection (2), et le second ensemble de détection (3) étant configuré pour déterminer une position initiale du premier ensemble de détection (2).

2. Appareil de détection du bord ondulé de la feuille d'électrode selon la revendication 1, dans lequel l'ensemble mobile (21) comprend :
un mécanisme de puissance (211), couplé de manière mobile à l'élément de support (1) ; et
un connecteur (212), couplé au mécanisme de puissance (211), le connecteur (212) étant configuré pour se déplacer avec le mécanisme de puissance (211) vers une position proche de la feuille d'électrode (5), pour être en contact avec la feuille d'électrode (5).

3. Appareil de détection du bord ondulé de la feuille d'électrode selon la revendication 2, dans lequel l'élément de détection (22) comprend un capteur de pression (221) couplé entre le mécanisme de puissance (211) et le connecteur (212), le capteur de pression (221) est configuré pour capter une force appliquée entre le connecteur (212) et la feuille d'électrode (5), et l'ensemble mobile (21) se déplace avec une variation de la force appliquée.

4. Appareil de détection du bord ondulé de la feuille d'électrode selon la revendication 3, dans lequel l'élément de détection (22) comprend en outre un élément de détection de déplacement (222) couplé au mécanisme de puissance (211), et l'élément de détection de déplacement (222) est configuré pour détecter un déplacement de l'ensemble mobile (21).

5. Appareil de détection du bord ondulé de la feuille d'électrode selon la revendication 4, dans lequel l'élément de support (1) est pourvu d'un outil de mesure (223), l'outil de mesure (223) est opposé à l'élément de détection de déplacement (222) en termes de position, et l'élément de détection de déplacement (222) lit le déplacement de l'ensemble mobile (21) à travers l'outil de mesure (223).

6. Appareil de détection du bord ondulé de la feuille d'électrode selon la revendication 4, comprenant en outre :
une unité de commande (4), l'unité de commande (4) étant raccordée électriquement au capteur de pression (221) et au mécanisme de puissance (211), et l'unité de commande (4) étant configurée pour recevoir une valeur de force appliquée envoyée par le capteur de pression (221) et commander un mouvement du mécanisme de puissance (211) en fonction de la valeur de force appliquée.

7. Appareil de détection du bord ondulé de la feuille d'électrode selon la revendication 6, dans lequel l'unité de commande (4) est en outre couplée à l'élément de détection de déplacement (222), l'unité de commande (4) est en outre configurée pour recevoir un déplacement envoyé par l'élément de détection de déplacement (222) et déterminer un niveau de bord ondulé de la feuille d'électrode (5) en fonction du déplacement, et le niveau de bord ondulé est un rapport du déplacement à une distance entre deux rouleaux de passage (6) supportant la feuille d'électrode (5).

8. Appareil de détection du bord ondulé de la feuille d'électrode selon la revendication 1, dans lequel le premier ensemble de détection (2) et le second ensemble de détection (3) sont agencés côte à côte dans une direction de largeur de la feuille d'électrode (5).

9. Appareil de détection du bord ondulé de la feuille d'électrode selon la revendication 2, dans lequel le connecteur (212) est pourvu d'un élément flexible (213), et l'élément flexible (213) est configuré pour être en contact avec la feuille d'électrode (5).

10. Procédé de détection d'un bord ondulé d'une feuille d'électrode, dans lequel le procédé de détection du bord ondulé de la feuille d'électrode utilise l'appareil de détection du bord ondulé de la feuille d'électrode selon l'une quelconque des revendications 1 à 9, et le procédé de détection du bord ondulé de la feuille d'électrode est le suivant :
fourniture d'une feuille d'électrode (5) et de deux rouleaux de passage (6) et placement de la feuille d'électrode (5) sur les deux rouleaux de passage (6) pour un convoyage ; et
mise en contact de l'ensemble mobile (21) avec la feuille d'électrode (5) et détection, par l'élément de détection (22), d'un mouvement de l'ensemble mobile (21), de manière à détecter un bord ondulé de la feuille d'électrode (5).

11. Appareil de détection d'un bord ondulé d'une feuille d'électrode, comprenant :
un élément de support (1) ; et
un premier ensemble de détection (2), le premier ensemble de détection (2) comprenant un ensemble mobile (21) et un élément de détection (22), l'ensemble mobile (21) étant couplé à l'élément de support (1) et étant configuré pour être en contact avec la feuille d'électrode (5) ;
dans lequel l'élément de détection (22) comprend un capteur de pression (221), et le capteur de pression (221) est monté sur l'ensemble mobile (21) et est capable de détecter une force appliquée entre la feuille d'électrode (5) et l'ensemble mobile (21), de préférence dans lequel l'ensemble mobile (21) comprend un mécanisme de puissance (211) et un connecteur (212) configuré pour être en contact avec la feuille d'électrode (5), le mécanisme de puissance (211) est couplé au connecteur (212) ; le capteur de pression (221) est couplé entre le mécanisme de puissance (211) et le connecteur (212) et est configuré pour détecter une force appliquée entre le connecteur (212) et la feuille d'électrode (5) ; et le mécanisme de puissance (211) est couplé à l'élément de support (1) ;
dans lequel l'appareil comprend en outre :
un second ensemble de détection (3), disposé sur une ligne médiane d'une direction de longueur de la feuille d'électrode (5) et couplé de manière mobile à l'élément de support (1), le second ensemble de détection (3) ayant une même structure que le premier ensemble de détection (2), et le second ensemble de détection (3) étant configuré pour déterminer une position initiale du premier ensemble de détection (2).

12. Appareil de détection du bord ondulé de la feuille d'électrode selon la revendication 11, dans lequel une partie de détection du capteur de pression (221) est en contact avec le mécanisme de puissance (211) ou le connecteur (212).

13. Appareil de détection du bord ondulé de la feuille d'électrode selon la revendication 11, comprenant en outre une unité de commande (4), l'unité de commande (4) étant raccordée électriquement au capteur de pression (221), l'unité de commande (4) étant configurée pour recevoir une valeur de force appliquée envoyée par le capteur de pression (221) et déterminer si la feuille d'électrode (5) présente un bord ondulé en fonction de la valeur de force appliquée, de préférence dans lequel le mécanisme de puissance (211) est couplé de manière mobile à l'élément de support (1), de telle sorte que le mécanisme de puissance (211) est capable de se déplacer vers une position proche de la feuille d'électrode (5) par rapport à l'élément de support (1) ; l'unité de commande (4) est raccordée électriquement au mécanisme de puissance (211), et l'unité de commande (4) est configurée pour recevoir une valeur de force appliquée envoyée par le capteur de pression (221) et commander un mouvement du mécanisme de puissance (211) en fonction de la valeur de force appliquée, plus préférentiellement dans lequel l'élément de détection (22) comprend en outre un élément de détection de déplacement (222) couplé au mécanisme de puissance (211), et l'élément de détection de déplacement (222) est configuré pour détecter un déplacement du mécanisme de puissance (211), encore plus préférentiellement dans lequel l'unité de commande (4) est en outre raccordée électriquement à l'élément de détection de déplacement (222), l'unité de commande (4) est en outre configurée pour recevoir un déplacement envoyé par l'élément de détection de déplacement (222) et déterminer un niveau de bord ondulé de la feuille d'électrode (5) en fonction du déplacement, et le niveau de bord ondulé est un rapport du déplacement à une distance entre deux rouleaux de passage (6) supportant la feuille d'électrode (5).

14. Appareil de détection du bord ondulé de la feuille d'électrode selon l'une quelconque des revendications 11 à 13, dans lequel une extrémité du connecteur (212) qui est configurée pour être en contact avec la feuille d'électrode (5) est pourvue d'un élément rigide lisse (213), ou comprenant en outre un second ensemble de détection (3), le second ensemble de détection (3) ayant une même structure que le premier ensemble de détection (2) ; l'ensemble mobile (21) dans le second ensemble de détection (3) est configuré pour être en contact avec une portion de ligne médiane d'une direction de largeur de la feuille d'électrode (5) et pour être couplé à l'élément de support (1), de préférence comprenant en outre une unité de commande (4), et l'unité de commande (4) étant couplée au capteur de pression (221) et au second ensemble de détection (3).

15. Procédé de détection d'un bord ondulé d'une feuille d'électrode, dans lequel le procédé de détection du bord ondulé de la feuille d'électrode utilise l'appareil de détection du bord ondulé de la feuille d'électrode selon l'une quelconque des revendications 11 à 14, et le procédé de détection du bord ondulé de la feuille d'électrode est le suivant :
fourniture d'une feuille d'électrode (5) et de deux rouleaux de passage (6) et placement de la feuille d'électrode (5) sur les deux rouleaux de passage (6) pour un convoyage ; et
mise en contact de l'ensemble mobile (21) avec la feuille d'électrode (5) et détection, par le capteur de pression (221), d'une variation d'une force appliquée entre l'ensemble mobile (21) et la feuille d'électrode (5), de manière à détecter un bord ondulé de la feuille d'électrode (5).
